Europäisches Patentamt

European Patent Office

Office européen des brevets

(19)

(11) Veröffentlichungsnummer : **0 454 745 B1**

(12) **EUROPÄISCHE PATENTSCHRIFT**

(45) Veröffentlichungstag der Patentschrift :
**09.09.92 Patentblatt 92/37**

(51) Int. Cl.$^5$ : **F16K 27/10**

(21) Anmeldenummer : **90902212.1**

(22) Anmeldetag : **09.01.90**

(86) Internationale Anmeldenummer :
**PCT/EP90/00038**

(87) Internationale Veröffentlichungsnummer :
**WO 90/08281 26.07.90 Gazette 90/17**

(54) GEHÄUSESITZ EINES HUBVENTILS.

(30) Priorität : **21.01.89 DE 3901697**

(43) Veröffentlichungstag der Anmeldung :
**06.11.91 Patentblatt 91/45**

(45) Bekanntmachung des Hinweises auf die
Patenterteilung :
**09.09.92 Patentblatt 92/37**

(84) Benannte Vertragsstaaten :
**AT BE CH DE DK FR GB IT LI LU NL SE**

(56) Entgegenhaltungen :
**EP-A- 0 032 183**

(56) Entgegenhaltungen :
**DE-A- 3 609 772**
**DE-C- 638 462**
**DE-C- 699 580**
**GB-A- 522 126**
**US-A- 4 484 596**

(73) Patentinhaber : **KSB Aktiengesellschaft**
**Johann-Klein-Strasse 9**
**W-6710 Frankenthal (DE)**

(72) Erfinder : **BARTOSCHEK, Manfred**
**Friedensring 1**
**W-6710 Frankenthal (DE)**
Erfinder : **LOVISETTO, Primo**
**Via Montana, 22**
**I-36100 Vicenza (IT)**

EP 0 454 745 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 454 745 B1

## Beschreibung

Die Erfindung betrifft ein als Trennwand und Träger der Sitzfläche eines Hubventils dienendes Blechteil, welches in einer die Quer- und die Längsachse des Ventilgehäuses schneidenden Ebene in das Ventilgehäuse eingefügt ist.

Aus der DE-C 638 462 ist ein als Zwischenboden und Träger eines Sitzringes fungierendes Blechteil bekannt, das mit einer Rundnaht in ein Ventilgehäuse so eingeschweißt ist, daß seine den Sitzring aufnehmende Öffnung sich im rechten Winkel zur Durchflußachse des Ventils befindet. Die durch das Blechteil innerhalb des Strömungsweges gebildete Wand und die starke Umlenkung der Strömung am Ventilsitz verursachen große Strömungsverluste.

Aus der EP-A 0 032 183 ist ein Gehäuse für Absperrorgane bekannt, das ein die Funktion der Trennwand und des Sitzringträgers übernehmendes Blechteil besitzt, welches ähnlich gestaltet und angeordnet ist wie das vorher beschriebene. Es ist im übrigen mit einer Ausstülpung versehen, in der ein handelsübliches oder gesondert gefertigtes Ventilsitzteil befestigt ist. Auch für dieses Ventil ist als Nachteil der hohe Strömungsverlust zu nennen.

Der Erfindung liegt die Aufgabe zugrunde, ein als Trennwand und Träger der Ventilsitzfläche dienendes Blechteil zu schaffen, welches wenig aufwendig ist und eine günstige, an die Belange des Ventilgehäuses angepaßte Strömungsführung besitzt.

Die gestellte Aufgabe wird gelöst mit Hilfe der im kennzeichnenden Teil des Anspruches 1 genannten Merkmale. Die Unteransprüche nennen vorteilhafte Ausgestaltungen der Erfindung.

Das erfindungsgemäße Blechteil bietet die Möglichkeit, eine große, in der Achse der Anschlüsse liegende Durchströmöffnung zu verwirklichen, da der als Trennwand zwischen Einlaß- und Auslaßbereich des Ventilgehäuses wirkende Wandungsteil nur klein sein muß. Hieraus ergibt sich auch der Vorteil, daß das mit einer solchen Trennwand ausgestattete Ventilgehäuse eine geringe Anfälligkeit für Verschmutzungen besitzt. Als zusätzlicher Vorteil kommt hinzu, daß die Gestaltung des Blechteiles eine Strömung bewirkt, die aufgrund ihrer Druckverteilung einen Spüleffekt in dem verschmutzungsgefährdeten Sitzbereich erzeugt. Schließlich bleiben noch der geringe Materialaufwand und die einfache Fertigung des erfindungsgemäßen Blechteils zu erwähnen, wozu auch der Umstand beiträgt, daß dieses Blechteil bereits die Sitzfläche für das Ventil bildet, also kein weiteres Teil verwendet und befestigt werden muß.

Hubventile mit einer schräg zur Durchströmrichtung angeordneten Sitzfläche sind grundsätzlich bereits aus der DE-A 36 09 772 bekannt. Die Sitzpartie des in dieser Schrift dargestellten Hubventils ist allerdings einstückig mit dem Gehäuse ausgeführt. Sie ist auch anders gestaltet als das erfindungsgemäße Blechteil.

Anhand eines Ausführungsbeispiels wird die Erfindung näher erläutert. Die Zeichnung zeigt in

Fig. 1 ein mit einem Blechgehäuse ausgestattetes Hubventil, und in

Fig. 2 das die Trennwand und die Gehäusesitzfläche bildende Blechteil der Fig. 1 als vergrößerte Einzelheit.

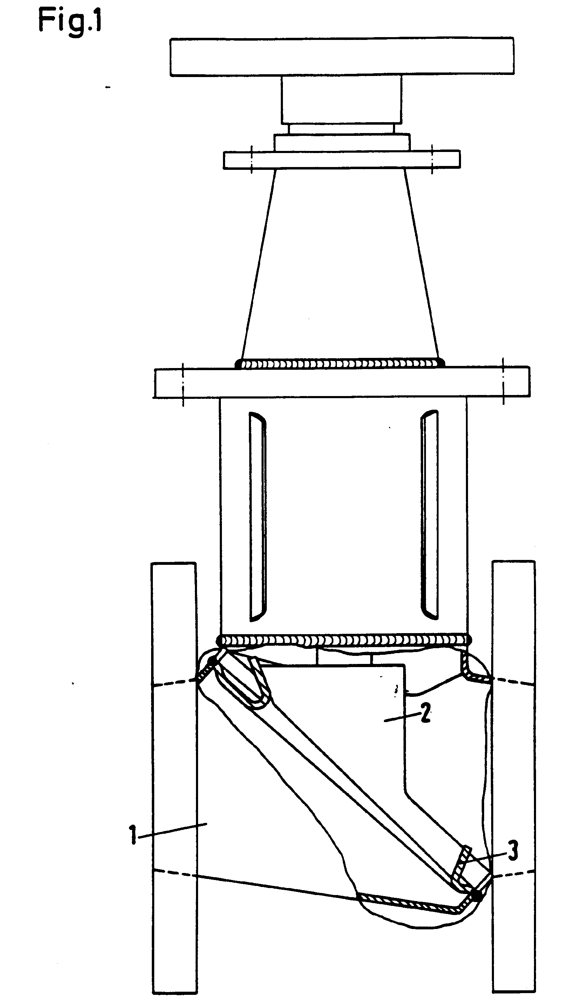

Das in der Fig. 1 dargestellte Hubventil ist mit einem Blechgehäuse (1) ausgestattet, in welches das die Trennwand und die Sitzfläche für ein Verschlußstück (2) bildende Blechteil (3) eingeschweißt ist. Die ellipsenförmige Öffnung des Blechteiles (3) ist so groß, daß das Blechteil (3) einem durch das Ventilgehäuse (1) geleiteten Flüssigkeitsstrom wenig Widerstandsfläche bietet. Dies gilt zwar grundsätzlich auch für eine in anderer Richtung fließende Strömung; zusätzliche Vorteile ergeben sich aber vor allem für die obengenannte Durchströmrichtung. Hierfür ist zum einen, leicht erkennbar, der Verlauf der im Strömungsweg befindlichen Flächen des Blechteiles (3) verantwortlich. Zum anderen bildet der untere Bereich einer im Blechteil (3) vorhandenen Aushalsung (4) eine zur Strömungsoptimierung beitragende Abrißkante. Im übrigen ergibt sich hieraus ein Reinigungsstrom durch eine quer zur Hauptströmung gerichtete Verwirbelung.

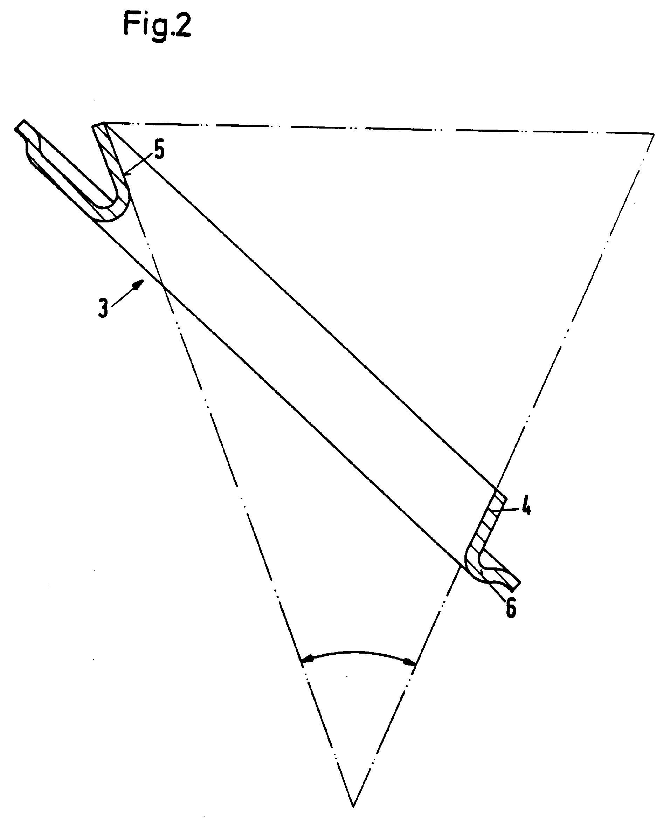

Wie die Fig. 2 zeigt, ist die Aushalsung (4) des aus einer Kreisförmigen Platte hergestellten Blechteils (3) mit Hilfe einer kegeligen Kalibrierung so geformt, daß seine Sitzfläche (5) mit einem Verschlußstück (2) zusammenzuwirken vermag, dessen Dichtfläche einen Ausschnitt aus einer Regelmantelfläche bildet. Zur Verstärkung besitzt das Blechteil (3) noch eine die Aushalsung (4) umschließende kreisförmige Sicke (6).

## Patentansprüche

1. Als Trennwand zwischen Einlaß- und Auslaßbereich eines Ventilgehäuses und als Träger der Sitzfläche für ein Verschlußstück eines Hubventils dienendes Blechteil, welches in einer die Quer- und die Längsachse des Ventilgehäuses schneidenden Ebene in das Ventilgehäuse eingefügt ist, **dadurch gekennzeichnet**, daß das Blechteil (3) aus einer Platte besteht, die mit einer schräg zu ihr angeordneten, kegelig kalibrierten Aushalsung (4) versehen ist, welche die Sitzfläche (5) für das Verschlußstück (2) des Hub-

2

EP 0 454 745 B1

ventils bildet.

2. Blechteil nach Anspruch 1, dadurch gekennzeichnet, daß das Blechteil (3) aus einer kreisförmigen Platte besteht.

3. Blechteil nach Anspruch 1, gekennzeichnet durch eine die Aushalsung (4) umschließende Sicke (6).

4. Blechteil nach Anspruch 1, gekennzeichnet durch eine oder mehrere versteifende Einprägungen.

5. Blechteil nach Anspruch 1, gekennzeichnet durch einen ellipsenförmigen, senkrecht zur Platte verlaufenden Durchgang.

6. Blechteil nach Anspruch 1, gekennzeichnet durch eine im Bereich der Sitzfläche (5) vorhandene Panzerung.

## Claims

1. Sheet metal component serving as a dividing wall, and a carrier of the seating surface, of a gate valve and being disposed, within the valve housing, in a plane which intersects the transverse and longitudinal axes of the valve housing, characterized in that the sheet metal component (3) consists of a plate provided with a conically calibrated, outwardly directed flange (4) which is inclined to the plate and defines the seating surface for the valving element (2) of the gate valve.

2. Sheet metal component according to claim 1, characterized in that the sheet metal component (3) consists of a circular plate.

3. Sheet metal component according to claim 1, characterized by a corrugation (6) which circumscribes the outwardly directed flange (4).

4. Sheet metal component according to claim 1, characterized by one or more stiffening embossments.

5. Sheet metal component according to claim 1, characterized by an elliptical passage extending perpendicular to the plate.

6. Sheet metal component according to claim 1, characterized by armor in the region of the seating surface (5).

## Revendications

1. Pièce de tôle servant de paroi de séparation entre la zone d'entrée et de sortie d'un boîtier de soupape et de support de la surface d'assise pour un obturateur d'une soupape d'élévation, pièce introduite dans le boîtier de soupape dans un plan sécant de l'axe transversal et de l'axe longitudinal du boîtier de soupape caractérisée en ce que la pièce de tôle (3) est formée d'une plaque munie d'un collet (4) incliné par rapport à cette plaque, calibré et conique, collet qui forme la surface d'appui (5) pour l'obturateur (2) de la soupape d'élévation.

2. Pièce de tôle selon la revendication 1 caractérisée en ce que la pièce de tôle (3) est formée d'une plaque circulaire.

3. Pièce de tôle selon la revendication 1 caractérisée par une moulure (6) entourant le collet (4).

4. Pièce de tôle selon la revendication 1 caractérisée par une ou plusieurs empreintes de renfort.

5. Pièce de tôle selon la revendication 1 caractérisée par un passage de forme élliptique perpendiculaire à la plaque.

6.  Pièce de tôle selon la revendication 1 caractérisée par un blindage situé dans la zone de la surface d'assise (5).

## Fig.1

Fig.2